# EUROPÄISCHE PATENTSCHRIFT

(11) **EP 0 558 729 B1**
(45) Veröffentlichungstag und Bekanntmachung des Hinweises auf die Patenterteilung: **13.03.1996**
(21) Anmeldenummer: 92920078.0
(22) Anmeldetag: 18.09.1992
(51) Int. Cl.: D21B 1/32

(54) **VERFAHREN ZUR AUFBEREITUNG VON BEDRUCKTEM ALTPAPIER**
METHOD OF PROCESSING PRINTED WASTE-PAPER
PROCEDE DE TRAITEMENT DE VIEUX PAPIERS IMPRIMES

(30) Priorität: 20.09.1991 DE 4131308; 11.10.1991 DE 4133683
(43) Veröffentlichungstag der Anmeldung: 08.09.1993
(73) Patentinhaber: J.M. Voith GmbH, D-89522 Heidenheim (DE)
(72) Erfinder: ORTNER, Herbert, D-7920 Heidenheim (DE); DÖRFLINGER, Hans-Dieter, D-7920 Heidenheim (DE)
(74) Vertreter: Weitzel, Wolfgang, Dr.-Ing. Patentanwalt
(86) Internationale Anmeldenummer: EP9202151
(87) Internationale Veröffentlichungsnummer: WO9306295

(56) Entgegenhaltungen:
- EP-A- 0 092 124
- EP-A- 0 354 307
- EP-A- 0 398 846
- DE-A- 2 413 278
- FR-A- 2 517 713
- GB-A- 904 279
- GB-A- 1 429 626
- GB-A- 2 033 784
- US-A- 3 891 497
- DAS PAPIER, Bd. 42, Nr. 10, Oktober 1988, DARMSTADT, DE Seiten 547-550, XP000000140 J. BRUCKNER 'dispergierung'

## Beschreibung

Die Erfindung betrifft ein Verfahren zur Aufbereitung von bedrucktem Altpapier gemäß dem Oberbegriff des Anspruches 1.

Ein solches Verfahren ist aus der FR-A-2 517 713 bekannt.

Der Einsatz von deinktem Altpapier als Faserstoffkomponente ist Stand der Technik bei der Herstellung von Zeitungsdruckpapieren, Kopierpapieren, hygienischen Papieren und Karton.

Ziel der gegenwärtigen Entwicklung ist auch der Einsatz von Deinkingstoffen für hochwertige Druckpapiere, wie z.B. Streichrohpapiere, LWC und SC-Papiere (Tief- und Offsetdruck). Für diese Einsatzfälle ist sowohl eine hohe Sauberkeit als auch ein hoher Weißgrad erforderlich. Gelingt es, deinkte Stoffe in der geforderten Qualität herzustellen, wird die Nachfrage entsprechend hoch sein, d.h. daß dann ausgesuchte, saubere Altpapiersorten nicht in ausreichendem Maß zur Verfügung sein werden. Es muß dann auf sogenannte "Haushaltssammelware", bestehend aus ca. 40 bis 60 % gelesenen Tageszeitungen und 60 bis 40 % illustrierten Zeitschriften, ausgewichen werden. Das Deinkingverfahren muß deshalb für dieses Altpapier konzipiert werden.

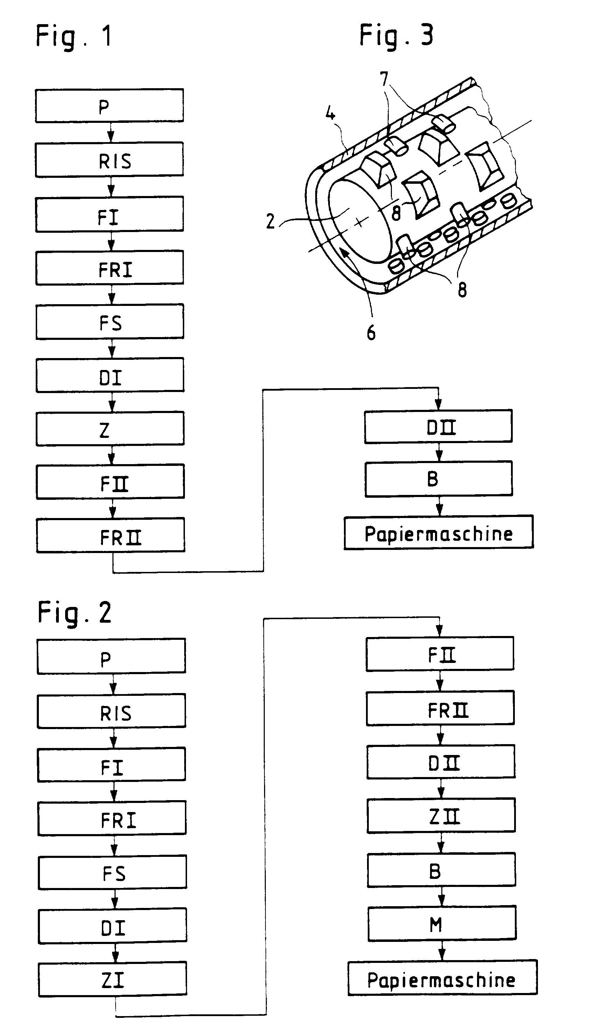

Das heute für Zeitungsdruck-Deinkingstoff bevorzugte Verfahren verwendet neben verschiedenen in den Reinigungsstufen eingesetzten Hydrozyklonen und Siebsortierern die Flotation, wie die ersten Stufen von Fig. 1 zeigen. Diese beruht auf einem Verfahrensvorschlag für sogenannte SC-Papiere, wie er bereits diskutiert wurde. Es wurde darüber auch in der Fachpresse referiert. Mit diesem Verfahren lassen sich deinkte Stoffe mit hohem Weißgrad und guter Sauberkeit herstellen. In Abhängigkeit vom eingetragenen Altpapier wird es jedoch vorkommen, daß die Sauberkeit für diese hochwertigen Druckpapiere nicht ausreicht, d.h. daß der deinkte Altpapierstoff z.B. mehr Schmutzpunkte enthalten kann als z.B. der gleichzeitig als Faserstoffkomponente eingesetzte Holzschliff.

Nach Versuchen zeigt ein Vergleich zwischen Holzschliff und einem Deinkingstoff, der im Dispergiergerät gleichzeitig gebleicht und dann nachflotiert wurde, daß dieser Stoff zwar für die Herstellung von Zeitungsdruckpapier gut geeignet wäre, nicht jedoch für hochwertige Druckpapiere.

Als Dispergiermaschine werden üblicherweise Scheibenzerfaserungsmaschinen eingesetzt, insbesondere um störende, klebende Substanzen so zu zerkleinern und unter die Sichtbarkeitsgrenze zu verteilen, daß diese den Papiererzeugungsprozeß nicht mehr stören.

Zur Vergleichmäßigung (Homogenisierung) von Farbteilchen sind auch sogenannte Einwellenzerfaserer bekannt, insbesondere in Aufbereitungsanlagen der Kartonerzeugung (Voith Sonderdruck 2066 = Wochenblatt für Papierfabrikation Nr. 23/24 (1977), 981-985.

Die Aufgabe ist, einen Altpapierstoff aus deinktem Altpapier bereitzustellen, der einen entsprechenden Weißgrad aufweist, um in hochwertigen Druckpapieren eingesetzt zu werden.

Diese Aufgabe wird erfindungsgemäß durch die Merkmale des kennzeichnenden Teils des Patentanspruchs 1 gelöst.

Es werden in der zweiten Zerfaserungs-Dispergierstufe die Farb-/Schmutzteilchen so dispergiert und homogenisiert, daß der so behandelte Altpapierstoff den hohen Sauberkeitsansprüchen von superkalandrierten Papiersorten für Rotations-, Offset- oder Tiefdruck entspricht.

Der sogenannte Einwellen-Zerfaserer weist singuläre, stab- oder klotzförmige Knetelemente sowohl am Rotor als auch am Stator auf, die in einem von zwei konzentrischen Zylinderflächen begrenzten Knetraum angeordnet sind.

Man erhält einen Papierrohstoff, welcher die erforderlichen Sauberkeitswerte für Streichrohpapiere der Qualität LWC und SC-Papiere (z.B. für Tief- oder Offsetdruck) aufweist. Auch die Weiße und Helligkeit entsprechen den dafür bestehenden Ansprüchen.

Ein aus EP 0 122 868-A1 bekannter, vielstufiger Refiner dient nur dem Zweck, bei niedriger Konsistenz die Stoffparameter, wie Entwässerbarkeit und Festigkeit, von Holzstoff zu verbessern.

Die nachfolgende Tabelle gibt die gemessenen Werte nach den verschiedenen Verfahrensstufen und für Holzstoff an.

Alle Messungen wurden mit einem TASS-Plus-Bildanalysegerät der Firma LEITZ durchgeführt.

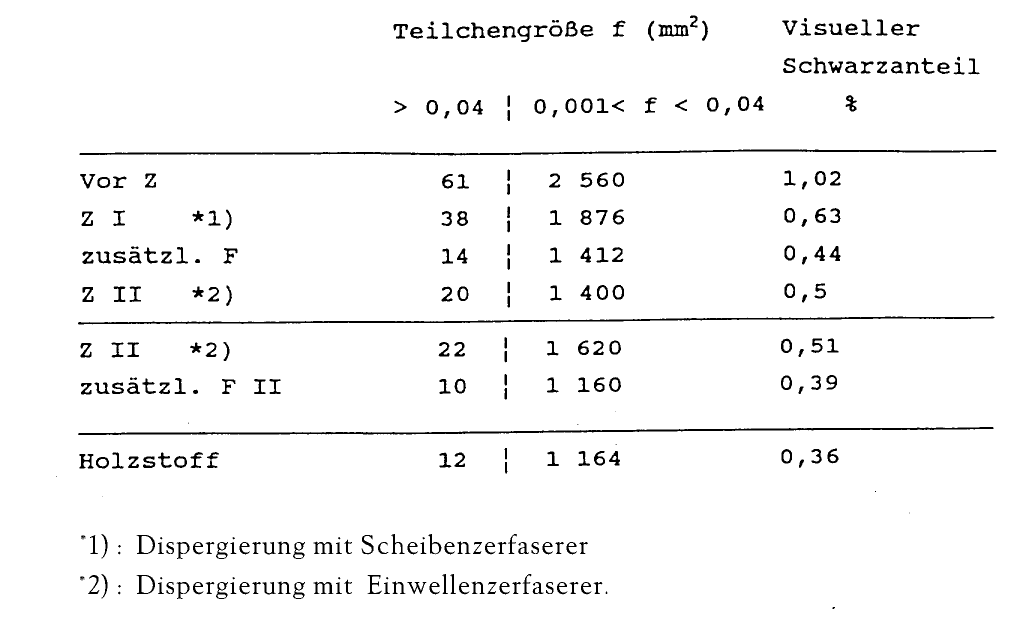

Nachfolgend wird die Erfindung anhand den Figuren der Zeichnung erläutert.
Figur 1 stellt ein bekanntes Prinzipbild und
Figur 2 ein Prinzipbild des Aufbereitungsverfahrens nach der Erfindung,
Figur 3 eine Skizze eines Einwellen-Zerfaserers
Figur 4 ein Prinzipbild eines Scheibenzerfaserers und
Figur 5 ein Prinzipbild mit verschiedenen, weiteren Schaltungsvarianten dar.

In den Schemata der Altpapieraufbereitung werden folgende Symbole gebraucht:
- P: Auflösung, allgemein im Stofflöser,
- R: Vorreinigung,
- S: Vorsortierung,
- F: Flotation,
- FR: Feinreinigung,
- FS: Feinsortierung,
- D: Eindickung (Entwässerung bzw. Wäsche),
- Z: Dispergierung (Zerfaserung),
- B: Bleiche.

Gemäß der Erfindung wird nach Fig. 2 eine doppelte Flotation, nämlich FI und FII, und eine doppelte Dispergierung, ZI und ZII, vorgesehen. Die Feinreinigung findet dabei im allgemeinen in Hydrozyklonen statt, die vielfach auch als Cleaner bezeichnet werden. Für die Feinsortierung werden Siebsortierer mit Siebkörben benutzt, die entweder eine Sieblochung oder schlitzförmige Siebperforation aufweisen. Die entsprechenden Dimensionen der Perforationen sind in der Fachwelt allgemein bekannt. Ebenso bekannt sind auch die chemischen Formulierungen für die Flotation, Bleiche und Dispergierung.

Vorteilhafterweise wird in der ersten Zerfaserungsstufe ZI eine sogenannte Dispergierbleiche durchgeführt, wobei sich folgende Formulierung anbietet, jeweils in Prozent, bezogen auf otro-Altpapier: H₂O₂ (100 %) 0,5-1,5, Natriumsilikat (37 Bé) 1,1, NaOH (100 %) 0,3. Die Stoffkonsistenz beträgt dabei vorzugsweise zwischen 24 und 30 %. Die Bleichdauer liegt etwa bei 3 Minuten, und die Verarbeitungstemperatur in diesem Apparat vorzugsweise zwischen 75 und 95°C. Ferner kommt als Zusatz noch in Frage DTPA (40 %-Lösung) 0,3 bis 0,5-Sammler 0,5, Flotationshilfsmittel 0,5. Letztere Chemikalie kann aber auch hinter dem Zerfaserer in einer Mischbütte bzw. dem Mischbehälter der Flotationsanlage eingegeben werden.

Man kann statt der ersten Flotationsstufe FI auch eine Wäsche anwenden. Vorzugsweise wird in der zweiten Zerfaserungsstufe, in dem Einwellen-Zerfaserer, ohne Dampfzugabe, gearbeitet. Im allgemeinen liegt die Temperatur zwischen 20 und 115°C, höchstens 140°C, jedoch ist die üblicherweise gegebene Arbeitstemperatur von etwa 40°C auch anwendbar, so daß man für einen empfehlenswerten Bereich 38 bis 85°C annehmen kann. Der spezifische Arbeitsbedarf in der zweiten Zerfaserungsstufe liegt zwischen 30 und 80 kWh/t otro.

Man kann bei den angegebenen Temperaturen auch mit Druckgasbeaufschlagung (Luft oder Stickstoff z.B.) bei z.B. um 1,4 bar, also ohne entsprechend hochgespannten Dampf - bei Temperaturen ab 100°C -, in den Dispergiermaschinen, insbesondere auch im Einwellen-Zerfaserer, arbeiten.

Eine abschließende Bleichstufe kann als Hydrosulfit-Bleiche, z.B. mit Natriumdithionit, oder es kann auch bei beiden Bleichstufen eine Peroxid-Bleiche stattfinden. Man kann auch umgekehrt im Falle der unterschiedlichen Bleichchemikalien verfahren.

Man kann auch die zweite Flotationsstufe FII eventuell fortlassen, falls die Altpapierqualität es erlaubt. Man hätte dann zwei direkt hintereinandergeschaltete Zerfaserungsbzw. Dispergierstufen ZI und ZII.

Zwischen den beiden Zerfaserungsmaschinen können neben einer Bleiche verschiedene Reinigungsstufen, auch kombiniert bzw. in Reihe eingesetzt werden, wie z.B. eine Cleaneranlage und/oder Wäsche, um entsprechend der Zusammensetzung der abgelösten Schmutzteilchen sowie deren Größe und Gewicht den entsprechenden, auf die Reinigungsanlage bezogenen Anteil der Schmutzteilchen bereits hier zu entfernen.

Am vorteilhaftesten ist es, dann bzw. auch sonst im überwiegenden Maß eine nachgeschaltete Flotationsstufe F II vorzusehen (siehe Tabelle).

Die Weite des Knetraumes 6 (siehe Fig. 3) beträgt vorzugsweise mindestens 30 mm und kann bis 80 mm und mehr betragen, während die Länge des Knetraumes (Länge der Erzeugenden der Zylinderflächen) im allgemeinen mindestens 60 cm beträgt. Je nach Durchsatzmenge kann die Weite des Knetraumes variieren. In Fig. 3 sind die stabförmigen Knetelemente (kurze zylindrische Stücke) des Rotors 2 mit 8 und die Gegenelemente etwa gleicher Form des Stators 4 mit 7 bezeichnet. Die Elemente des Rotors insbesondere können auch etwa quaderförmig oder pyramidenförmig ausgebildet sein, wie mit 8' im oberen Teil der Figur angedeutet.

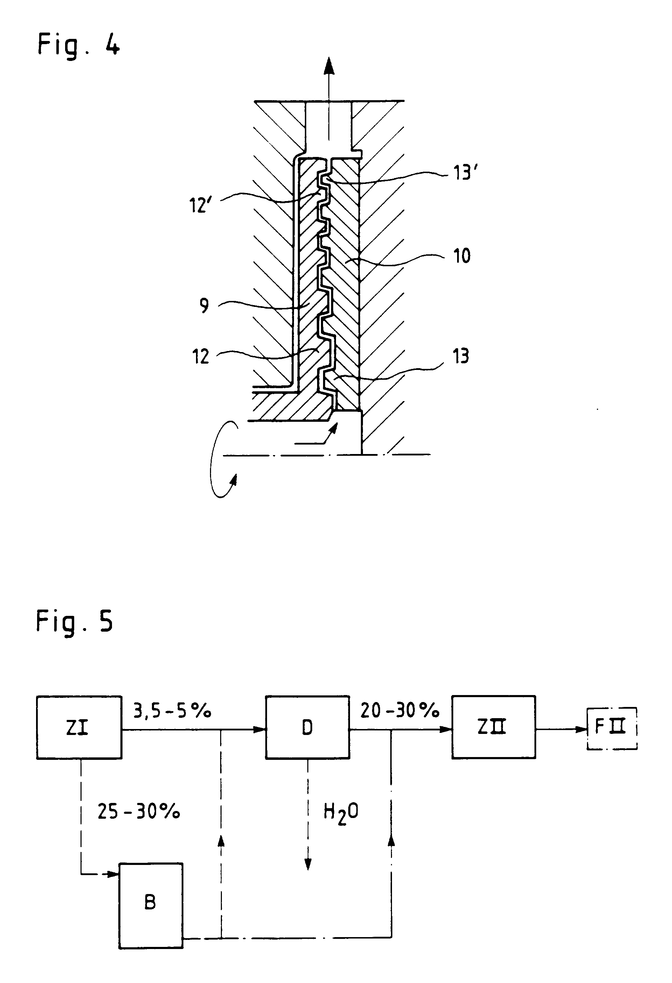

Nach Fig. 5 sind verschiedene Schaltungsvarianten möglich, wobei an den Leitungen die Konsistenzwerte bzw. -bereiche angegeben sind. Die Bleiche B im Turm bringt den Vorteil mit sich, daß eine für das nachfolgende Dispergiergerät günstige Quellung der Papierfasern erfolgt. Die Bleichdauer beträgt zwischen 20 und 120 min.

Die Scheiben des Scheibenzerfaserers können vorzugsweise zahn-, klotz- oder höckerartige Defibrierelemente aufweisen. Die Spaltweiten liegen im üblichen Rahmen und betragen zwischen 0,5 und 12 mm, welche stark abhängig vom spezifischen Arbeitsverbrauch ist; ein weiterer Einfluß beruht auf der Stoffbeschaffenheit (wie Mahlgrad) und der Chemikalienzugabe. Der spezifische Arbeitsverbrauch beträgt auch vorzugsweise 60 bis 80 KWh/t otro. Die Klötze (Zähne) der Rotorscheibe 9 und der Statorscheibe 10, die in der in Fig. 4 gezeichneten Weise zusammenwirken, haben z.B. eine Höhe zwischen 8 und 12 mm und eine Breite und Dicke zwischen 8 und 15 mm. Dabei sind die radial inneren Zähne 12, 13 kräftiger als die äußeren Zähne 12', 13'.

## Patentansprüche

1. Verfahren zur Aufbereitung von bedrucktem Altpapier, insbesondere Altpapier, das überwiegend Haushaltssammelware und/oder Kaufhausabfälle, z.B. Zeitungen, Prospekte, Kaufhauskataloge oder Illustrierte, enthält, durch Auflösung, verschiedene Reinigungsstufen, Flotation oder Wäsche und Dispergierung, gekennzeichnet durch die folgenden Merkmale:
1.1 es sind zwei Dispergierstufen (ZI, ZII) vorgesehen;
1.2 die erste Dispergierstufe (ZI) wird mit einem Scheibenzerfaserer durchgeführt;
1.3 die zweite Dispergierstufe (ZII) wird mit einer Knetmaschine, z.B. mit einem Ein-Wellen-Zerfaserer (2, 4), durchgeführt, bei einer Temperatur zwischen 20 und 110°C, am besten zwischen 38 und 65°C und bei einem Arbeitsbedarf von 30 bis 150 kWh/t otro, am besten von 30 bis 80 kWh/t otro.

2. Verfahren nach Anspruch 1, dadurch gekennzeichnet, daß die beiden Dispergierstufen (ZI, ZII) ohne zwischengeschaltete Flotationsstufe aufeinanderfolgen.

## Claims

1. Method for processing printed waste paper, especially waste paper mainly containing household collected material and/or department store waste, for example, news papers, brochures, shop catalogues or magazines, by dissolving, various cleansing steps, floatation or washing and dispersing, characterised by the following features:
1.1 two dispersion steps (ZI,ZII) are provided:
1.2 the first dispersion step (ZI) is performed with a disk shredder;
1.3 the second dispersion step (ZII) is performed with a kneading machine, for example with a single shaft shredder (2,4), at a temperature between 20 and 110°C, preferably between 38 and 65°C, and
at a work requirement of 30 to 150 kWh/t otro, preferably of 30 to 80 kWh/t otro.

2. Method according to claim 1, characterised in that the two dispersion steps (ZI,ZII) follow one another without an intermediate floatation step.

## Revendications

1. Procédé de traitement de vieux papiers imprimés, notamment de vieux papiers qui proviennent majoritairement de la collecte des ménages et/ou des déchets de grands magasins, par exemple journaux, prospectus, catalogues de grands magasins ou magazines, par délitage, plusieurs étapes de purification, flottation ou lessivage et dispersion, caractérisé par les caractéristiques suivantes
1.1. on prévoit deux étapes de dispersion (ZI, ZII),
1.2, on réalise la première étape de dispersion (ZI) avec un défibreur à disque,
1.3, on réalise la deuxième étape (ZII) avec une machine de malaxage, par exemple avec un défibreur monoarbre (2, 4), à une température comprise entre 20 et 110°C, au mieux entre 38 et 65°C, et avec une consommation d'énergie de 30 à 150 kWh/t d'extrait sec, au mieux de 30 à 80 kWh/t d'extrait sec.

2. Procédé selon la revendication 1, caractérisé en ce que les deux étapes de dispersion (ZI, ZII) se succèdent sans interposition d'un étage de flottation.
